# EUROPÄISCHE PATENTANMELDUNG

(11) **EP 3 711 852 A1**
(43) Veröffentlichungstag der Anmeldung: **23.09.2020**
(21) Anmeldenummer: 19164232.1
(22) Anmeldetag: 21.03.2019
(51) Int. Cl.: B01J 19/00, B01J 19/24, B01J 3/04, B01J 4/02, G01N 21/359, G01N 21/84

(54) **VERFAHREN UND VORRICHTUNG ZUR QUANTITATIVEN ÜBERWACHUNG DER ZUSAMMENSETZUNG EINER OLIGOMER-/MONOMERMISCHUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur quantitativen Überwachung der Zusammensetzung einer Oligomer-/Monomermischung enthaltend eine Mehrzahl von Mischungskomponenten. Das erfindungsgemäße Verfahren ist dadurch gekennzeichnet, dass mittels einer NIR-Spektroskopiemesseinheit (7) unter Anwendung einer chemometrischen Methode die quantitative Zusammensetzung der Oligomer-/Monomermischung gemessen wird, wobei der Flüssigkeitsdruck in der quantitativ überwachten Oligomer-/Monomermischung p_{L} > 3 bar ist. Ferner betrifft die Erfindung eine Vorrichtung zur quantitativen Überwachung der Zusammensetzung einer Oligomer-/Monomermischung enthaltend eine Mehrzahl von Mischungskomponenten sowie eine Anlage (100) zur Produktion eines Polymerproduktes

## Beschreibung

Die Erfindung betrifft ein Verfahren zur quantitativen Überwachung der Zusammensetzung einer Oligomer-/Monomermischung enthaltend eine Mehrzahl von Mischungskomponenten. Ferner betrifft die Erfindung eine Vorrichtung zur quantitativen Überwachung der Zusammensetzung einer Oligomer-/Monomermischung sowie einer Anlage zur Produktion eines Polymerproduktes.

Bei der Herstellung verschiedenster Produkte in der industriellen Chemie, insbesondere in der Produktion polymerer Werkstoffe ist das Einhalten einer definierten Stöchiometrie der Reaktanten von entscheidender Bedeutung für eine gleichbleibende Produktqualität und -ausbeute. So ist beispielsweise bei der Herstellung von Polyurethanwerkstoffen eine definierte Stöchiometrie der beteiligten Polyole, Isocyanate, Aktivatoren, Stabilisatoren, Treibmittel usw. in exakt vorgegebener Menge einzuhalten, um eine ausreichend gut und vor allem reproduzierbare Produktqualität zu gewährleisten. Gleichwohl wird in der betrieblichen Praxis häufig auf eine kontinuierliche Qualitätskontrolle während der Verarbeitung verzichtet.

Der Verarbeiter vertraut im Regelfall den Produktspezifikationen des Herstellers der Rohstoffe und der Dosiergenauigkeit der eigenen Anlagen. Abweichungen vom Sollwert durch fehlerhafte Abmischung, Lagerung oder Zudosierung einzelner Komponenten bleiben häufig unentdeckt und führen im negativen Fall zu Materialausschuss oder Schwankungen der Produktqualität.

Es besteht daher Bedarf an einem Verfahren zur Überwachung der Zusammensetzung einer Oligomer-/Monomermischung enthaltend eine Mehrzahl von Mischungskomponenten, welches eine präzise quantitative Analyse der Zusammensetzung ermöglicht und sich ferner durch eine universelle Einsetzbarkeit zur Qualitätskontrolle in der Produktion auszeichnet.

Die Aufgabe wird mit einem Verfahren zur quantitativen Überwachung der Zusammensetzung einer Oligomer-/Monomermischung enthaltend eine Mehrzahl von Mischungskomponenten dadurch gelöst, dass mittels einer NIR-Spektroskopiemesseinheit unter Anwendung einer chemometrischen Methode die quantitative Zusammensetzung der Polymermischung gemessen wird, wobei der Flüssigkeitsdruck in der quantitativ überwachten Oligomer-/Monomermischung p_{L} > 3 bar ist.

Eine Oligomer-/Monomermischung im Sinne der vorliegenden Erfindung kann überwiegend Oligomere, ein Gemisch aus Oligomeren und Monomeren oder überwiegend Monomere jeweils nebst Zusatzstoffen (Additive) enthalten. In jedem Falle sind die Komponenten der Oligomer-/Monomermischung ausgewählt, um an einer Polymerisationsreaktion, insbesondere einer Polyadditions- oder Polykondensationsreaktion, teilzunehmen. Beispielsweise kann es sich bei einer Oligomer-/Monomermischung im Sinne der Erfindung um eine durch ein Polyol mit Zusatzstoffen gebildete Oligomermischung handeln, welche mit einem Isocyanat oder einer Isocyanatmischung in einer Polyadditionsreaktion zu einem Polyurethanwerkstoff reagiert. Gleichermaßen kann es sich bei der Oligomer-/Monomermischung im Sinne der Erfindung um eine durch oligomeres Isocyanat, beispielsweise oligomeres MDI, nebst Zusatzstoffen gebildete Oligomermischung handeln, welches mit einem Polyol oder einer Polyolmischung zu einem Polyurethanwerkstoff reagiert. Bei einer Oligomer-/Monomermischung im Sinne der Erfindung kann es sich auch um eine durch ein monomeres Isocyanat, wie TDI oder monomeres MDI, nebst Zusatzstoffen gebildete Monomermischung handeln. Ebenso ist die sind Mischungen aus monomerem und oligomerem MDI möglich.

Der besondere Vorteil des Einsatzes der NIR-Spektroskopie bei der quantitativen Überwachung der Zusammensetzung einer Oligomer-/Monomermischung besteht darin, dass die Messung hochpräzise im laufenden Betrieb einer Produktionsanlage durchgeführt werden kann. Insbesondere kann die Messung bei Drücken > 3 bar durchgeführt werden, so dass sie sich u.a. auch für die quantitative Überwachung von Oligomer-/Monomermischungen in unter Druck stehenden Gefäßen oder Leitungen eignet. Bei diesen Drücken ist u.a. das Auftreten von Gasblasen in der zu untersuchenden Oligomer-/Monomermischung, welche zu einem verstärkten Signalrauschen führen, minimiert. Dies wirkt sich insbesondere dann vorteilhaft aus, wenn beispielsweise über das Rührwerk Gas in die Oligomer-/Monomermischung eingetragen wird oder die Oligomer-/Monomermischungen unter Anwendung einer sogenannten Gasbeladung verarbeitet werden, wie dies teilweise bei der Produktion von Polyurethanwerkstoffen erfolgt.

Die Nahinfrarot-(NIR-)Spektroskopie ist als analytisches Verfahren eine weit verbreitete Technik, die sowohl im Labor als auch im Online-Betrieb eingesetzt wird. Einsatzgebiete sind beispielsweise die kontinuierliche Analyse von Wein (WO2007/006099A1), Bitumen (US 7067811B2) oder Insulin (US7755051B2). Darüber hinaus wird die NIR-Spektroskopie eingesetzt, um Partikelgrößen (US2015/0293005) oder OH-Zahlen (EP 3 179 232 A1) zu bestimmen. Die Verwendung von NIR-Techniken für spezielle Messaufgaben ist ferner bekannt aus: WO 00/02035 (Bestimmung von organischer Säure in organischem Polymer), US 005717209 (Spektralanalyse von Kohlenwasserstoffen), US 006228650; WO 99/31485 (Kontrolle der Trennung von chemischen Komponenten in einem Alkylierprozess mit Säurekatalysator), US 6339222; WO 00/68664 (Bestimmung von Ionischen Spezies in Pulp Liquor), DE 10005130A1 (Kontrolle von Polymerprozessen, Bestimmung von NCO in PU)

Die Kombination von NIR-Spektroskopie mit chemometrischen Auswerteverfahren für spezielle Messaufgaben ist ebenfalls an sich aus dem Stand der Technik bekannt, z. B. DE 21 39 269, WO 97/41420, WO 98/29787, WO 99/31485, JP 11350368, JP 2000146835, JP 2000298512, WO 2002/04394, WO 2002/12969, U.S. Patent 5,707,870, U.S. Patent 5,712,481, und WO 2000/68664.

Chemometrischen Auswertemethoden beruhen beispielsweise auf dem Partial Least Square-Verfahren (PLS), wie z. B. in Raphael Vieira "In-line and In Situ Monitoring of Semi-Batch Emulsion Copolymerizations Using Near-Infrared Spectroscopy" J Applied Polymer Science, Vol. 84, 2 670-2 682 (2002) beschrieben. Weiteres zu chemometrischen Auswerteverfahren findet sich in T. Rohe "Near Infrared (NIR) spectroscopy for inline monitoring of polymer extrusion processes" Talanta 50 (1999) 283-290 bzw. C. Miller "Chemometrics for on-line spectroscopy applications - theory and practice", J Chemometrics 2000; 14: 513-528 bzw. "Multivariate Analysis of Near-Infrared Spectra Using G-Programming Language" J. Chem. Inf.Comput. Sci. 2000, 40, 1 093-1 100.

Einen Überblick über die Verwendung von multivariaten chemometrischen Kalibrationsmodellen in der analytischen Chemie gibt ferner "Multivariate Kalibration", Jörg-Peter Conzen, 2001, ISBN 3-929431-13-0.

Wie erwähnt, ist erfindungsgemäß vorgesehen, dass der Flüssigkeitsdruck in der quantitativ überwachten Oligomer-/Monomermischung p_{L} > 3 bar ist. Nach einer ersten weitergehenden Ausgestaltung der Erfindung ist vorgesehen, dass der Flüssigkeitsdruck in der quantitativ überwachten Oligomer-/Monomermischung p_{L} > 20 bar und besonders bevorzugt > 120 bar ist. Derartig hohe Drücke kommen beispielsweise bei der Polyurethanherstellung zur Anwendung, bei der eine Vermischung der Reaktanten mittels Gegenstrominjektion erfolgt.

Nach einer weiteren vorteilhaften Ausgestaltung der Erfindung wird die NIR-Spektroskopie in einem Wellenlängenbereich von 700 - 3000 nm, bevorzugt 780 - 2500 nm und besonders bevorzugt 1000 nm - 2250 nm durchgeführt.

Nach einer vorteilhaften Ausgestaltung der Erfindung kann die NIR-Spektroskopie als Transmissionsmessung, insbesondere als Online-Transmissionsmessung, durchgeführt werden, wobei die Strahlquelle und das Detektorelement einander gegenüberliegend angeordnet sind. In diesem Fall kann der Abstand zwischen Strahlquelle und Detektorelement 1 bis 20 mm betragen. Hierdurch ist sichergestellt, dass einerseits eine hinreichende Menge der Oligomer-/Monomermischung durchstrahlt wird, um ein ausreichendes Signal-zu-Rausch-Verhältnis zu erhalten. Andererseits wird eine zu starke Abschwächung der Intensität der NIR-Strahlung vermieden. Als "Online-Transmissionsmessung" im Sinne der vorliegenden Erfindung wird verstanden, dass die Messung online, d.h. ohne Probenentnahme, sondern beispielsweise in einem laufenden Prozess, insbesondere einem Produktionsprozess, durchgeführt werden kann. Bevorzugt kann eine NIR-Messzelle in eine Leitung integriert werden, mit welcher das Oligomer-/Monomermischung einem Reaktor zugeführt wird. Alternativ kann eine Messsonde in den Vorlagebehälter der Anlage integriert werden.

Alternativ zur Transmissionsmessung kann die Messung mittels NIR-Spektroskopie auch als Transflexionsmessung erfolgen, wobei die Oligomer-/Monomermischung durch Reflexion des Messstrahls an einer reflektierenden Oberfläche zweifach im Ergebnis durchstrahlt wird.

Für die NIR-Spektroskopiemesseinheit können unterschiedliche Messaufbauten eingesetzt werden. So ist nach einer weiteren vorteilhaften Ausgestaltung der Erfindung vorgesehen, dass die NIR-Spektroskopiemesseinheit ein Dioden-Array-Spektrometer oder ein FT-IR-Spektrometer ist.

Besonders bevorzugt wird ein FT-Spektrometer als NIR-Spektroskopiemesseinheit, wobei die quantitative Zusammensetzung der Oligomer-/Monomermischung quasi-kontinuierlich gemessen wird. Durch eine quasi-kontinuierliche Messung kann eine besonders engmaschige Überwachung der Zusammensetzung der Oligomer-/Monomermischung erreicht werden, so dass annähernd Echtzeitinformationen zur quantitativen Zusammensetzung der überwachten Oligomer-/Monomermischung zur Verfügung stehen.

Das erfindungsgemäße Verfahren kann an unterschiedlichen Positionen beispielsweise in einer Produktionslinie oder auch in einem Laborumfeld zur Anwendung kommen. So ist nach einer weiteren vorteilhaften Ausgestaltung der Erfindung vorgesehen, dass die Oligomer-/Monomermischung in einem unter Druck stehenden Gefäß gelagert wird oder in einer unter Druck stehenden Leitung, bevorzugt in einer Zirkulationsleitung, geführt wird, wobei die einzelnen Mischungskomponenten der Oligomer-/Monomermischung jeweils über Zuführungsleitungen dem Gefäß oder der Leitung zugeführt werden.

Besonders eignen sich die Messwerte der quantitativen Überwachung der Zusammensetzung der Oligomer-/Monomermischung für eine Regelung der Zusammensetzung. So können nach einer weiteren Ausgestaltung der Erfindung die Messwerte der NIR-Spektroskopiemesseinheit an eine Regeleinheit übermittelt werden, wobei bei einem Abweichen von einer Sollzusammensetzung der Oligomer-/Monomermischung die Regeleinheit ein Regelsignal an eine in wenigstens einer Zuführungsleitung angeordnete Dosiereinheit übermittelt.

Eine besonders vorteilhafte Anwendung des erfindungsgemäßen Verfahrens besteht in der quantitativen Überwachung der Zusammensetzung von mehreren Oligomer-/Monomermischungen, welche miteinander gemischt werden und dabei zwecks Produktion beispielsweise eines bestimmten Polymerproduktes miteinander reagieren. Insbesondere kann eine erste Oligomer-/Monomermischung und wenigstens eine zweite Oligomer-/Monomermischung vorgesehen sein, wobei die erste Oligomer-/Monomermischung über eine erste Leitung in eine Mischungs- und Reaktionseinheit eingeleitet wird und die wenigstens eine zweite Oligomer-/Monomermischung über wenigstens eine zweite Leitung in die Mischungs- und Reaktionseinheit eingeleitet wird, wobei die erste Oligomer-/Monomermischung und die wenigstens eine zweite Oligomer-/Monomermischung dort gemischt werden und miteinander zu einem Polymerprodukt reagieren, wobei die Zusammensetzung der ersten Oligomer-/Monomermischung und/oder die die quantitative Zusammensetzung der zweiten Oligomer-/Monomermischung mittels der NIR-Spektroskopiemesseinheit quantitativ überwacht wird/werden.

Als besonders geeignet erweist es sich, wenn dabei die NIR-Spektroskopie zur Überwachung der quantitativen Zusammensetzung der ersten Oligomer-/Monomermischung in der ersten Leitung und/oder der quantitativen Zusammensetzung der Oligomer-/Monomermischung in der wenigstens einen zweiten Leitung im Bereich des Anschlusses der ersten Leitung und/oder der wenigstens einen zweiten Leitung an die Mischungs- und Reaktionseinheit durchgeführt wird.

Ein weiterer Aspekt der vorliegenden Erfindung betrifft ein Verfahren zur Produktion eines Polymerproduktes aus einer ersten Oligomer-/Monomermischung und wenigstens einer zweiten Oligomer-/Monomermischung nach einem der Ansprüche 10 oder 11. Für die Vorteile dieses Verfahrens gelten die vorstehend genannten Vorteile entsprechend.

Ein weiterer Aspekt der vorliegenden Erfindung betrifft eine Vorrichtung zur quantitativen Überwachung der Zusammensetzung einer Oligomer-/Monomermischung enthaltend eine Mehrzahl von Mischungskomponenten, wobei die Vorrichtung wenigstens einen Behälter oder wenigstens eine Leitung zur Speicherung oder Führung der Oligomer-/Monomermischung bei einem Flüssigkeitsdruck von p_{L} > 3 bar umfasst, wobei die Vorrichtung ferner eine NIR-Spektroskopiemesseinheit umfasst, wobei die Vorrichtung eingerichtet ist zur quantitativen Überwachung der Zusammensetzung der Oligomer-/Monomermischung gemäß dem Verfahren nach einem der Ansprüche 1 bis 12.

Für die Vorteile dieses Verfahrens gelten die vorstehend genannten Vorteile wiederum entsprechend.

Nach einer vorteilhaften Ausgestaltung der Erfindung ist bei der Vorrichtung eine Regeleinheit vorgesehen, wobei die Regeleinheit derart ausgebildet ist, dass sie bei einem quantitativen Abweichen der Zusammensetzung der in dem Behälter oder der wenigstens einen Leitung gespeicherten oder geführten Oligomer-/Monomermischung von einer Sollzusammensetzung ein Regelsignal an eine in wenigstens einer Zuführungsleitung zu dem Behälter oder zu der Leitung angeordnete Dosiereinheit übermittelt.

Ein weiterer Aspekt der vorliegenden Erfindung betrifft eine Anlage zur Produktion eines Polymerproduktes, insbesondere eines Poylurethanwerkstoffes, umfassend:
- eine Mischungs- und Reaktionseinheit zur Mischung einer ersten Oligomer-/Monomermischung und wenigstens einer zweiten Oligomer-/Monomermischung,
- eine an die Mischungs- und Reaktionseinheit flüssigkeitsleitend angeschlossene erste Leitung und wenigstens eine an die Mischungs- und Reaktionseinheit flüssigkeitsleitend angeschlossene zweite Leitung,
wobei die erste Leitung ausgebildet ist, um die erste Oligomer-/Monomermischung bei einem Flüssigkeitsdruck p_{L} > 3 bar in die Mischungs- und Reaktionseinheit einzuleiten und/oder die wenigstens eine zweite Leitung ausgebildet ist, um die wenigstens eine zweite Oligomer-/Monomermischung bei einem Flüssigkeitsdruck p_{L} > 3 bar in die Mischungs- und Reaktionseinheit einzuleiten, wobei wenigstens eine NIR-Spektroskopiemesseinheit vorgesehen ist, wobei die wenigstens eine NIR-Spektroskopiemesseinheit ausgebildet ist, um die quantitative Zusammensetzung der ersten Oligomer-/Monomermischung in der ersten Leitung und/oder die quantitative Zusammensetzung der wenigstens einen zweiten Oligomer-/Monomermischung in der wenigstens einen zweiten Leitung gemäß dem Verfahren nach einem der Ansprüche 1 bis 12 zu überwachen.

Im Folgenden wir die vorliegende Erfindung anhand einer ein Ausführungsbeispiel der Erfindung darstellenden Zeichnung erläutert. Es zeigen:
- Fig. 1: eine Anlage zur Produktion eines Polyurethanwerkstoffes in einer stark schematisierten Darstellung und
- Fig. 2: Teile einer Vorrichtung zur quantitativen Überwachung der Zusammensetzung einer Polyolmischung in stark schematisierter Ansicht.

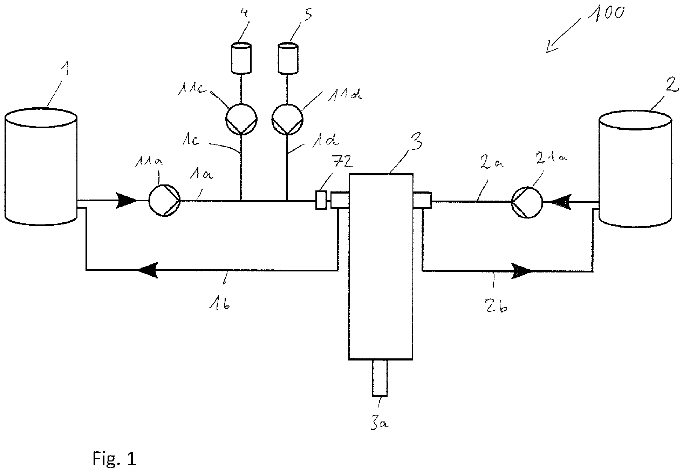

Fig. 1 zeigt eine Anlage 1 zur Produktion eines Polyurethan-Hartschaums in einer stark schematisierten Darstellung. Die Anlage 100 umfasst zwei Behälter 1, 2, in welchen ein Polyol (Behälter 1) nebst Zusatzstoffen, wie Aktivator, Katalysator oder weitere und ein Isocyanat (Behälter 2) nebst Zusatzstoffen als Rohstoffe des Polyurethanwerkstoffes gelagert sind. Behälter 1 ist über eine erste Leitung 1a mit einer Mischungs- und Reaktionseinheit 3 verbunden. Ebenso ist Behälter 2 über eine zweite Leitung 2a mit der Mischungs- und Reaktionseinheit 3 verbunden. In der Mischungs- und Reaktionseinheit 3 reagieren die beiden Raktantenströme und das Reaktionsgemisch wird über ein Auslaufrohr 3a in eine (nicht dargestellte) Form geleitet, wo es den gewünschten Polyurethan-Hartschaum bildet.

In der ersten Leitung 1a und der zweiten Leitung 2a ist jeweils eine Pumpeneinheit 11a, 21a zur Förderung der jeweiligen Stoffströme angeordnet. Ferner sind die erste und die zweite Leitung 1a, 2a jeweils als Zirkulationsleitung mit jeweils einem Rücklauf 1b, 2b von der Mischungs- und Reaktionseinheit 3 zu den Behältern 1, 2 ausgebildet. In beiden Leitungen 1a, 1b herrscht ein Druck von p_{L} > 3 bar, vorliegend 130 bar (Gegenstrominjektion).

Wie in Fig. 1 weiter erkennbar, münden zwei weitere Leitungen 1c, 1d in die den Behälter 1 mit der Mischungs- und Reaktionseinheit 3 verbindende erste Leitung 1a. Über diese Leitungen 1c, 1d werden aus Behältern 4, 5 notwendige Additive/Treibmittel zur Herstellung des Polyurethan-Hartschaums dem in der Leitung 1a transportierten Polyol zugegeben. Hierbei kann es sich beispielsweise um Treibmittel oder Katalysatoren handeln. Die von den Behältern 4, 5 gespeisten Leitungen 1c, 1d, die jeweils ebenfalls Pumpeneinheiten 11c, 11d umfassen, sind hier exemplarisch aufgeführt. Es versteht sich, dass je nach Anwendung auch eine deutlich größere Zahl an Additiven dem Polyol und/oder dem Isocyanat zugefügt werden können.

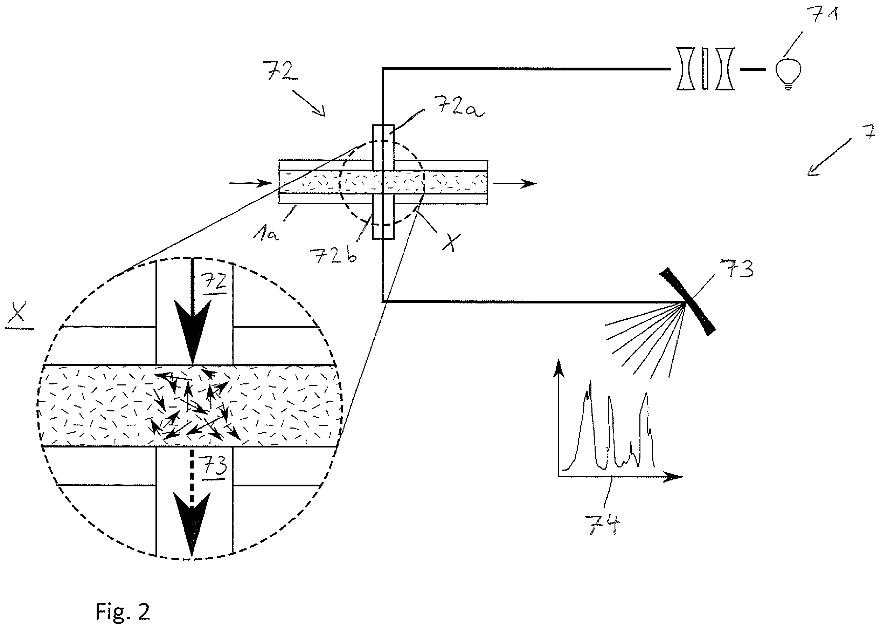

Unmittelbar an der Mischungs- und Reaktionseinheit 3ist auf der Seite der Polyolzuführung, d.h. auf der Druckseite der Pumpeneinheit 11a, die Testzelle 72 einer NIR-Spektroskopiemesseinheit 7 (s. Fig. 2) in die Leitung 1a integriert. Nicht dargestellt sind weitere Varianten, in denen die NIR-Spektroskopiemesseinheit nur auf der Isocyanatseite (Leitung 2a) oder auf beiden Seiten der Mischungs- und Reaktionseinheit vorgesehen sind. Wie im Zusammenhang mit Fig. 2 noch im Detail erläutert wird, kann mit der NIR-Spektroskopiemesseinheit 7 die Zusammensetzung der Polyolmischung unmittelbar am Eingang zur Mischungs- und Reaktionseinheit 3 quantitativ überwacht und das Ausgangssignal der NIR-Spektroskopiemesseinheit 7 über eine (nicht dargestellte) Regeleinheit zur Konstanthaltung Zusammensetzung der Polyolmischung verwendet werden. In einer alternativen / batchweisen Betriebsweise kann das Material aus den Behältern 1, 2 so lange über die Leitungen 1a, 1b, 2a, 2b rezirkuliert und mit Additiven wie bspw. über Leitung 1c, 1d versehen werden, bis die gewünschte Zusammensetzung in Behältern 1, 2 eingestellt ist.

In Fig. 2 sind Teile einer Vorrichtung zur quantitativen Überwachung der Zusammensetzung einer Polyolmischung in stark schematisierter Ansicht dargestellt. Im Einzelnen zeigt Fig. 2 die Testzelle 72 einer NIR-Spektroskopiemesseinheit 7 mit einer vergrößerten Einzelheit X. Die Testzelle 72 umfasst den Abschnitt der Leitung 1a aus Fig. 1 sowie daran angeschlossen zwei sich gegenüberliegende Sonden 72a, 72b. Sonde 72a fungiert als Strahlquelle, mittels derer ein NIR-Messsignal in die durch die Leitung 1a strömende Polyolmischung eingestrahlt wird. Das NIR-Messsignal wird von einer entsprechenden NIR-Strahlungsquelle erzeugt und über eine Optik in ein Lichtleiterkabel geleitet, über welches zur Messsonde 72a gelangt.

Das in die von der Polyolmischung durchströmte Leitung 1a eingestrahlte NIR-Messsignal wird durch Absorption und ggf. auch Streuung (vgl. Einzelheit X) wellenlängenabhängig abgeschwächt. Das abgeschwächte Signal wird sodann von der für NIR-Strahlung empfindlichen Messsonde 72b als Detektorelement detektiert und beispielsweise über ein weiteres Lichtleiterkabel zu einem Spektrometeraufbau 73, beispielsweise in Form eines Interferometers geleitet. Der Abstand zwischen der Sonde 72a (Strahlquelle) und der Sonde 72b (Detektorelement) kann je nach Absorptions- und Streuverhalten der durch die Leitung 1a strömenden Mischung in einem weiten Bereich eingestellt werden, beispielsweise zwischen 1 und 20 mm.

Das im Spektrometeraufbau 73 erhaltene Spektrum 74 kann sodann an eine elektronische Auswerte- und Anzeigeeinheit (nicht dargestellt) geleitet werden. Besonders eignet sich das mittels der NIR-Spektroskopiemesseinheit 7 aufgenommene Messsignal für einen Regelkreis, bei dem die quantitative Zusammensetzung des Polyolgemisches der Leitung 1a, 1b überwacht wird. Stellt beispielsweise die NIR-Spektroskopiemesseinheit 7 einen zu geringen Anteil einer Mischungskomponente, beispielsweise des Additivs aus dem Behälter 4, fest, so wird ein Regelsignal an die entsprechende Pumpeneinheit 11c geleitet, welche eine Höherdosierung dieses Additivs veranlasst, bis der korrekte Anteil des Additivs in der Polyolmischung durch die NIR-Spektroskopiemesseinheit 7 wieder gemessen wird.

Der besondere Vorteil des Messverfahrens besteht auch darin, dass die Messungen quasi-kontinuierlich erfolgen können, so dass entsprechende Abweichungen von der Sollzusammensetzung durch das Regelsystem sehr schnell kompensiert werden können.

## Patentansprüche

1. Verfahren zur quantitativen Überwachung der Zusammensetzung einer Oligomer-/Monomermischung enthaltend eine Mehrzahl von Mischungskomponenten,
**dadurch gekennzeichnet, dass**
mittels einer NIR-Spektroskopiemesseinheit (7) unter Anwendung einer chemometrischen Methode die quantitative Zusammensetzung der Oligomer-/Monomermischung gemessen wird, wobei der Flüssigkeitsdruck in der quantitativ überwachten Oligomer-/Monomermischung p_{L} > 3 bar ist.

2. Verfahren nach Anspruch 1,
**dadurch gekennzeichnet, dass**
der Flüssigkeitsdruck in der quantitativ überwachten Oligomer-/Monomermischung p_{L} > 20 bar und besonders bevorzugt > 120 bar ist.

3. Verfahren nach Anspruch 1 oder 2,
**dadurch gekennzeichnet, dass**
die NIR-Spektroskopie in einem Wellenlängenbereich von 700 - 3000 nm, bevorzugt 780 - 2500 nm und besonders bevorzugt 1000 nm - 2250 nm durchgeführt wird.

4. Verfahren nach einem der Ansprüche 1 bis 3,
**dadurch gekennzeichnet, dass**
die NIR-Spektroskopie als Transmissionsmessung, insbesondere als Online-Transmissionsmessung, durchgeführt wird, wobei die Strahlquelle (72a) und das Detektorelement (72b) einander gegenüberliegend angeordnet sind.

5. Verfahren nach Anspruch 4,
**dadurch gekennzeichnet, dass**
der Abstand zwischen Strahlquelle (72a) und Detektorelement (72b) 1 bis 20 mm beträgt.

6. Nach einem der Ansprüche 1 bis 5,
**dadurch gekennzeichnet, dass**
die NIR-Spektroskopiemesseinheit (7) ein Dioden-Array-Spektrometer oder ein FT-IR-Spektrometer ist.

7. Verfahren nach Anspruch 6,
**dadurch gekennzeichnet, dass**
die NIR-Spektroskopiemesseinheit (7) ein FT-Spektrometer ist und die quantitative Zusammensetzung der Oligomer-/Monomermischung quasi-kontinuierlich gemessen wird.

8. Verfahren nach einem der Ansprüche 1 bis 7,
**dadurch gekennzeichnet, dass**
die Oligomer-/Monomermischung in einem unter Druck stehenden Gefäß (1, 2) gelagert wird oder in einer unter Druck stehenden Leitung (1a, 2a), bevorzugt in einer Zirkulationsleitung (1a, 1b, 2a, 2b), geführt wird, wobei die einzelnen Mischungskomponenten der Oligomer-/Monomermischung jeweils über Zuführungsleitungen (1c, 1d) dem Gefäß oder der Leitung (1a) zugeführt werden.

9. Verfahren nach Anspruch 8,
**dadurch gekennzeichnet, dass**
die Messwerte der NIR-Spektroskopiemesseinheit (7) an eine Regeleinheit übermittelt werden, wobei bei einem Abweichen von einer Sollzusammensetzung der Oligomer-/Monomermischung die Regeleinheit ein Regelsignal an eine in wenigstens einer Zuführungsleitung angeordnete Dosiereinheit übermittelt.

10. Verfahren nach Anspruch 8 oder 9,
**dadurch gekennzeichnet, dass**
eine erste Oligomer-/Monomermischung und wenigstens eine zweite Oligomer-/Monomermischung vorgesehen sind, wobei die erste Oligomer-/Monomermischung über eine erste Leitung (1a) in eine Mischungs- und Reaktionseinheit (3) eingeleitet wird und die wenigstens eine zweite Oligomer-/Monomermischung über wenigstens eine zweite Leitung (2a) in die Mischungs- und Reaktionseinheit eingeleitet (3) wird, wobei die erste Oligomer-/Monomermischung und die wenigstens eine zweite Oligomer-/Monomermischung dort gemischt werden und miteinander zu einem Polymerprodukt reagieren, wobei die Zusammensetzung der ersten Oligomer-/Monomermischung und/oder die Zusammensetzung der zweiten Oligomer-/Monomermischung mittels der NIR-Spektroskopiemesseinheit (7) quantitativ überwacht wird/werden.

11. Verfahren nach Anspruch 10,
**dadurch gekennzeichnet, dass**
die NIR-Spektroskopie zur Überwachung der quantitativen Zusammensetzung der ersten Oligomer-/Monomermischung in der ersten Leitung (1a) und/oder der quantitativen Zusammensetzung der Oligomer-/Monomermischung in der wenigstens einen zweiten Leitung (2a) im Bereich des Anschlusses der ersten Leitung und/oder der wenigstens einen zweiten Leitung an die Mischungs- und Reaktionseinheit (3) durchgeführt wird.

12. Verfahren zur Produktion eines Polymerproduktes aus einer ersten Oligomer-/Monomermischung und wenigstens einer zweiten Oligomer-/Monomermischung nach einem der Ansprüche 10 oder 11.

13. Vorrichtung zur quantitativen Überwachung der Zusammensetzung einer Oligomer-/Monomermischung enthaltend eine Mehrzahl von Mischungskomponenten,
**dadurch gekennzeichnet, dass**
die Vorrichtung wenigstens einen Behälter (1) oder wenigstens eine Leitung (1a) zur Speicherung oder Führung der Oligomer-/Monomermischung bei einem Flüssigkeitsdruck von p_{L} > 3 bar umfasst, wobei die Vorrichtung ferner eine NIR-Spektroskopiemesseinheit (3) umfasst, wobei die Vorrichtung eingerichtet ist zur quantitativen Überwachung der Zusammensetzung der Oligomer-/Monomermischung gemäß dem Verfahren nach einem der Ansprüche 1 bis 12.

14. Vorrichtung nach Anspruch 13,
**dadurch gekennzeichnet, dass**
eine Regeleinheit vorgesehen ist, wobei die Regeleinheit derart ausgebildet ist, dass sie bei einem quantitativen Abweichen der Zusammensetzung der in dem Behälter oder der wenigstens einen Leitung gespeicherten oder geführten Oligomer-/Monomermischung von einer Sollzusammensetzung ein Regelsignal an eine in wenigstens einer Zuführungsleitung (1a, 2a, 1c, 1d) zu dem Behälter oder zu der Leitung angeordnete Dosiereinheit (11a, 21a, 11c, 11d) übermittelt.

15. Anlage (100) zur Produktion eines Polymerproduktes, umfassend:
- eine Mischungs- und Reaktionseinheit zur Mischung einer ersten Oligomer-/Monomermischung und wenigstens einer zweiten Oligomer-/Monomermischung,
- eine an die Mischungs- und Reaktionseinheit (3) flüssigkeitsleitend angeschlossene erste Leitung (1a) und wenigstens eine an die Mischungs- und Reaktionseinheit (3) flüssigkeitsleitend angeschlossene zweite Leitung,
wobei die erste Leitung (1a) ausgebildet ist, um die erste Oligomer-/Monomermischung bei einem Flüssigkeitsdruck p_{L} > 3 bar in die Mischungs- und Reaktionseinheit (3) einzuleiten und/oder die wenigstens eine zweite Leitung (2a) ausgebildet ist, um die wenigstens eine zweite Oligomer-/Monomermischung bei einem Flüssigkeitsdruck p_{L} > 3 bar in die Mischungs- und Reaktionseinheit (3) einzuleiten, wobei wenigstens eine NIR-Spektroskopiemesseinheit (7) vorgesehen ist, wobei die wenigstens eine NIR-Spektroskopiemesseinheit (7) ausgebildet ist, um die quantitative Zusammensetzung der ersten Oligomer-/Monomermischung in der ersten Leitung (1a) und/oder die quantitative Zusammensetzung der wenigstens einen zweiten Oligomer-/Monomermischung in der wenigstens einen zweiten Leitung (2a) gemäß dem Verfahren nach einem der Ansprüche 1 bis 12 zu überwachen.
